# EUROPEAN PATENT APPLICATION

(11) **EP 4 832 383 A1**
(43) Date of publication of application: **28.10.2026**
(21) Application number: 24915099.6
(22) Date of filing: 17.12.2024
(51) Int. Cl.: H04L 1/00

(54) **TRANSMISSION METHOD FOR 64B/66B CODING BLOCKS, AND ELECTRONIC DEVICE AND READABLE STORAGE MEDIUM**

(30) Priority: 02.01.2024 CN 202410011631
(71) Applicant: ZTE CORPORATION, Shenzhen, Guangdong 518057 (CN)
(72) Inventor: YUAN, Yan, Shenzhen, Guangdong 518057 (CN)
(74) Representative: Ziebig Hengelhaupt Intellectual Property Attorneys Patentanwaltskanzlei PartGmbB
(86) International application number: PCT/CN2024/139831
(87) International publication number: WO 2025/145884

(57) **Abstract**

Disclosed in the present application are a transmission method for 64B/66B coding blocks, and an electronic device and a readable storage medium. The method comprises: acquiring 64B/66B coding blocks to be transmitted; converting 8-bit type domains in coding blocks of a first group of coding types into a first group of 8-bit coding type domains, and keeping 56-bit information domains unchanged; converting 8-bit type domains in coding blocks of a second group of coding types into a second group of 9-bit coding type domains, and converting the 56-bit information domains into 55-bit information domains; forming 66 bits of second control 64B/66B coding blocks by using 2-bit synchronization headers, the first group of 8-bit coding type domains and the 56-bit information domains; forming 66 bits of third control 64B/66B coding blocks by using the 2-bit synchronization headers, the second group of 9-bit coding type domains and the 55-bit information domains; and transmitting data 64B/66B coding blocks, the second control 64B/66B coding blocks and the third control 64B/66B coding blocks.

## Description

### CROSS-REFERENCE TO RELATED APPLICATIONS

This application claims priority to Chinese Patent Application No. 202410011631.7, filed with the CNIPA on January 2, 2024, and entitled "TRANSMISSION METHOD FOR 64B/66B CODING BLOCKS, AND ELECTRONIC DEVICE AND READABLE STORAGE MEDIUM", which is incorporated herein by reference in its entirety.

### TECHNICAL FIELD

Embodiments of the present application relate to the technical field of communications, in particular to a method for transmitting a 64B/66B code block, an electronic device and a readable storage medium.

### BACKGROUND

64B/66B code blocks are the most common coding method used in an Ethernet physical coding sublayer (PCS), and are used for converting a high-speed media access control frame (MAC frame) into a fixed-rate bit block while adding some necessary control information. Information to be transmitted in the 64B/66B code blocks includes data information and control information. The data information mainly corresponds to data in the media access control frame, while the control information includes special functions required for transmitting the media access control frame, such as indicating a special state during transmission of the media access control frame. The special state includes sending idle control information, sending local fault or remote fault, or marking a frame header and frame trailer of the media access control frame, or the like. When a rate of the 64B/66B code blocks is high, the 64B/66B code blocks are generally not transmitted directly. Instead, the 64B/66B code blocks are first subjected to transcoding processing to be converted into 256B/257B code blocks, and then forward error correction (FEC) coding information is added to the 256B/257B code blocks before transmission. Correspondingly, after receiving such information, FEC decoding and error correction are first performed using an FEC algorithm to obtain the 256B/257B code blocks, and then the 256B/257B code blocks are subjected to transcoding processing to be recovered into the 64B/66B code blocks.

In existing 64B/66B code blocks, 64B/66B code blocks with synchronization header starting with "10" include 4 bits of redundant information in a type field. This allows, at most, the conversion of the 64B/66B code blocks into 512B/513B code blocks, but not into code blocks with higher coding efficiency.

### SUMMARY

Embodiments of the present application provide a method for transmitting a 64B/66B code block, an electronic device and a readable storage medium.

In a first aspect, a method for transmitting a 64B/66B code block is provided. The method includes: acquiring a to-be-transmitted 64B/66B code block, wherein the 64B/66B code block includes a 2-bit synchronization header, and a value of the 2-bit synchronization header is used to indicate that the 64B/66B code block is a data 64B/66B code block or a first control 64B/66B code block; and the first control 64B/66B code block further includes a 8-bit type field and a 56-bit information field, and a value of the 8-bit type field is used to distinguish between 11 different coding types; upon the condition that first control 64B/66B code blocks in the 11 different coding types are divided into code blocks in a first group of coding types and code blocks in a second group of coding types, converting the 8-bit type field of a code block in the first group of coding types into an 8-bit first-group coding type field and keeping the 56-bit information field thereof unchanged, or converting the 8-bit type field of a code block in the second group of coding types into a 9-bit second-group coding type field and converting the 56-bit information field thereof into a 55-bit information field; forming 66 bits of a second control 64B/66B code block from the 2-bit synchronization header, the 8-bit first-group coding type field, and the 56-bit information field; or forming 66 bits of a third control 64B/66B code block from the 2-bit synchronization header, the 9-bit second-group coding type field, and the 55-bit information field; and transmitting the data 64B/66B code block, the second control 64B/66B code block, or the third control 64B/66B code block.

In a second aspect, an electronic device is provided, the electronic device includes a processor and a memory, the memory stores a program or instruction runnable on the processor, and the program or the instruction, when executed by the processor, implements the steps of the method for transmitting a 64B/66B code block as described in the first aspect.

In a third aspect, a readable storage medium is provided. The readable storage medium has a program or instruction stored thereon, and the program or the instruction, when executed by a processor, implements the steps of the method for transmitting a 64B/66B code block as described in the first aspect.

### BRIEF DESCRIPTION OF DRAWING(S)

Accompanying drawings here, which are incorporated in and constitute a part of this specification, illustrate embodiments consistent with the present application and together with the specification, serve to explain the principles of the present application.
FIG. 1 shows a schematic flowchart of a method for transmitting a 64B/66B code block provided by exemplary embodiments of the present application.
FIG. 2 shows a schematic structural diagram of an electronic device provided by exemplary embodiments of the present application.

### DETAILED DESCRIPTION

Exemplary embodiments will be illustrated in detail here, examples of which are represented in accompanying drawings. When the following descriptions refer to the accompanying drawings, the same number in the different accompanying drawings represents the same or similar elements unless otherwise indicated. The implementations described in the following exemplary embodiments do not represent all implementations consistent with the present application. On the contrary, they are merely examples of an apparatus and method consistent with some aspects of the present application as detailed in the appended claims.

Table 1 shows coding information of 64B/66B code blocks. Referring to Table 1, the 64B/66B code block is bit block having 66 bits in length, with the first 2 bits of the 66-bit block named as a synchronization head, also synchronization header, and the remaining 64 bits named as the block payload. In the present application, each bit in the 64B/66B code blocks is represented by a bit position. Bit position 1 represents the 1st bit in the 64B/66B code block, bit position 2 represents the 2nd bit in the 64B/66B code block, bit position 3 represents the 3rd bit in the 64B/66B code block, and so on, with bit position 66 representing the 66th bit in the 64B/66B code block.

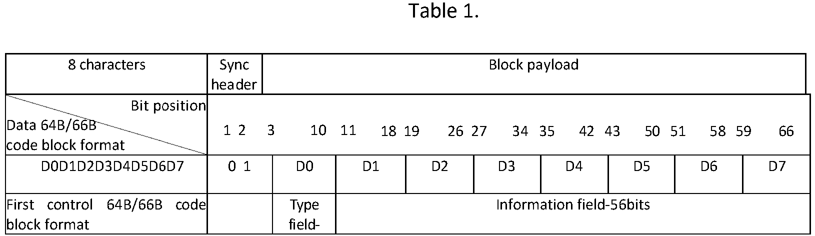

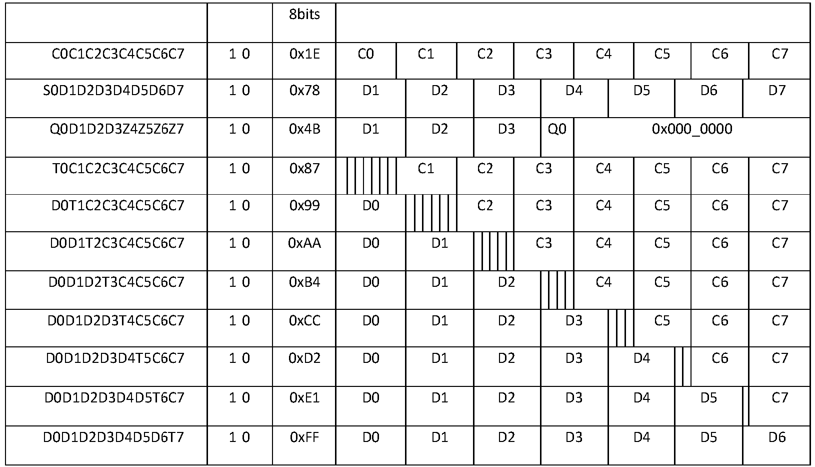

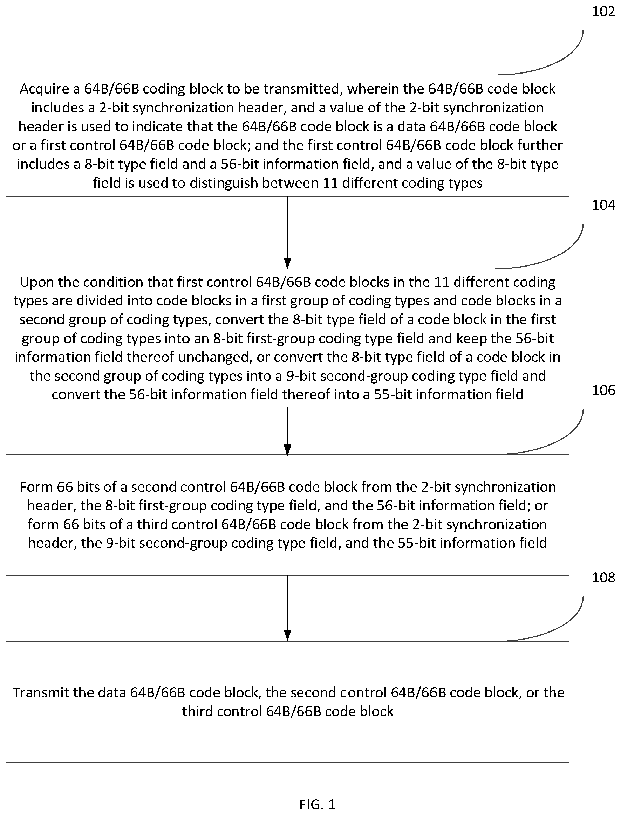

FIG. 1 shows a schematic flowchart of a method for transmitting 64B/66B code block provided by exemplary embodiments of the present application. Referring to FIG. 1, the method may include the following steps.

At Step 102, a 64B/66B code block to be transmitted is acquired. The 64B/66B code block includes a 2-bit synchronization header, and a value of the 2-bit synchronization header is used to indicate that the 64B/66B code block is a data 64B/66B code block or a first control 64B/66B code block; and the first control 64B/66B code block further includes an 8-bit type field and a 56-bit information field, and a value of the 8-bit type field is used to distinguish between 11 different coding types.

The to-be-transmitted 64B/66B code block in the embodiments of the present application is used for an Ethernet physical coding sublayer (PCS) with a rate greater than or equal to 40 G. The value of the 2-bit synchronization header of the 64B/66B code block may include 01 and 10. If the synchronization header is 01, the 64B/66B code block is a data 64B/66B code block; if the synchronization v 10, the 64B/66B code block is a first control 64B/66B code block. The first control 64B/66B code block includes data information, control information, and a type field, and the contents of the data information and the control information may be determined by the type field.

Optionally, the control information may be a plurality of control characters, with one control character including 7 bits of information. The control information may also be an ordered set control block, with the ordered set control block including 28 bits of information. The control characters are used for representing relatively simple control information, and the ordered set control block is used for representing relatively complex control information.

At Step 104,_upon the condition that first control 64B/66B code blocks in the 11 different coding types are divided into code blocks in a first group of coding types and code blocks in a second group of coding types, the 8-bit type field of a code block in the first group of coding types is converted into an 8-bit first-group coding type field and the 56-bit information field thereof is kept unchanged, or the 8-bit type field of a code block in the second group of coding types is converted into a 9-bit second-group coding type field and the 56-bit information field thereof is converted into a 55-bit information field.

The control information and the data information included in the first control 64B/66B code block are determined by the coding type of the first control 64B/66B code block. The coding type of the first control 64B/66B code block may be identified by an identifier represented by part of bits in the 8-bit first-group coding type field or the 9-bit second-group coding type field.

At Step 106, 66 bits of a second control 64B/66B code block are formed from the 2-bit synchronization header, the 8-bit first-group coding type field, and the 56-bit information field; or 66 bits of a third control 64B/66B code block are formed from the 2-bit synchronization header, the 9-bit second-group coding type field, and the 55-bit information field.

The 66 bits of the second control 64B/66B code block or the third control 64B/66B code block are formed according to the synchronization header, the first-group coding type field or the second-group coding type field, and the 56-bit information field or the 55-bit information field, such that the coding type fields in the reconstituted second control 64B/66B code block and third control 64B/66B code block may contain more redundant bits, thereby enabling the reconstituted second control 64B/66B code block and third control 64B/66B code block to be converted into code blocks with higher coding efficiency, for example, 1024B/1025B code blocks.

At Step 108, the data 64B/66B code block, the second control 64B/66B code block, or the third control 64B/66B code block is transmitted.

In the embodiment of the present application, whether a current acquired to-be-transmitted 64B/66B code block is a data 64B/66B code blocks or a first control 64B/66B code block is determined according the values of the 2-bit synchronization header. For example, 01 indicates that the 64B/66B code block is a data 64B/66B code block, and 10 indicates that the 64B/66B code block is a first control 64B/66B code block. The data 64B/66B code block includes 8 numeric characters, with one numeric character including 8 bits of information, and the data 64B/66B code block is left unchanged. The first control 64B/66B code block includes the 8-bit type field and the 56-bit information field, the value of the 8-bit type field may be used for distinguishing between 11 different coding types, and then the first control 64B/66B code blocks of the 11 different coding types may be divided into the code blocks in the first group of coding types and the code blocks in the second group of coding types. The 8-bit type field in the code block in the first group of coding types is converted into the 8-bit first-group coding type field, and the 56-bit information field is kept unchanged. The 8-bit type field in the code blocks in the second group of coding types is converted into the 9-bit second-group coding type field, and the 56-bit information field is converted into the 55-bit information field, so that the second control 64B/66B code block formed from the 2-bit synchronization header, the 8-bit first-group coding type field and the 56-bit information fields, as well as the third control 64B/66B code block formed from the 2-bit synchronization header, the 9-bit second-group coding type field and the 55-bit information field have more redundant bits in the coding type field. These redundant bits may be deleted to free up bit space when it is necessary to convert the second control 64B/66B code block and the third control 64B/66B code block into code blocks with higher coding efficiency. Thus, the data 64B/66B code block, the second control 64B/66B code block, and the third control 64B/66B code block may be converted into code blocks with higher coding efficiency, for example, 1024B/1025B code blocks, thereby improving transmission efficiency and leaving more rate for FEC coding information.

In an implementation, in the 64B/66B code block to be transmitted, a value of the 2-bit synchronization header being 01 represents that the 64B/66B code block is the data 64B/66B code block; a value of the 2-bit synchronization header being 10 represents that the 64B/66B code block is the first control 64B/66B code block; and a 56-bit information field includes a data character, a control character, fixed information, and information-field redundant bits.

In the embodiment of the present application, the first control 64B/66B code block includes 66 bits of information, of which the first 2 bits are the synchronization header. The synchronization header being 01 represents that the 64B/66B code block is a data 64B/66B code block, and the synchronization header being 10 represents that the 64B/66B code block is a first control 64B/66B code block. The latter 64 bits include the 8-bit type field for distinguishing between 11 different coding types. The 11 different coding types may be divided into the first group of coding types and the second group of coding types. The remaining 56-bit information field may include the data character, control character, fixed information, and information-field redundant bits.

In an implementation, the 56-bit information field of the first control 64B/66B code block includes the data character, the control character, the fixed information, and the information-field redundant bits, wherein the data character has a length of 8 bits and is represented by Dn, where n is a number from 1 to 8, and n represents an order in which the data character appears in the 56-bit information field; two types of control characters are included, one type of control character has a length of 7 bits and is represented by Cm, wherein m is a number from 1 to 8 and m represents an order in which the control character appears in the 56-bit information field, and the other type of control character has a length of 28 bits, including one 4-bit Q0 and three data characters D1, D2, and D3; the fixed information includes zeros in 28 bits, respectively; and the information-field redundant bits are bits in the 56-bit information field other than the data character, the control character, and the fixed information.

In the embodiment of the present application, Table 2 shows a 64B/66B code block provided by an embodiment of the present application. Referring to Table 2, for a data 64B/66B code block with a synchronization header of 01, the block payload includes 8 data characters, with each data character including 8 bits of information. For a first control 64B/66B code block with a synchronization header of 10, it includes 11 different coding types, the 11 different coding types may be divided into two groups, namely a first group of coding types and a second group of coding types. The first group of coding types includes 4 different coding types, and the second group of coding types includes 7 different coding types. In code blocks of the first group of coding types, 4 different coding types are distinguished by 8-bit first-group coding type fields. In code blocks of the second group of coding types, 7 different coding types are distinguished by 9-bit second-group coding type fields. At the same time, code blocks in the 4 different coding types in the first group of coding types are named as second control 64B/66B code blocks, and code blocks in the 7 different coding types of the second group of coding types are named as third control 64B/66B code blocks.

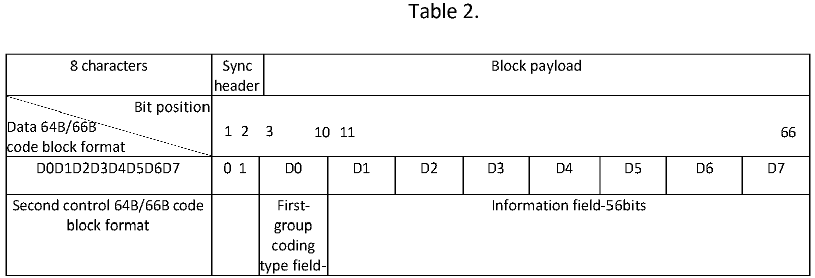

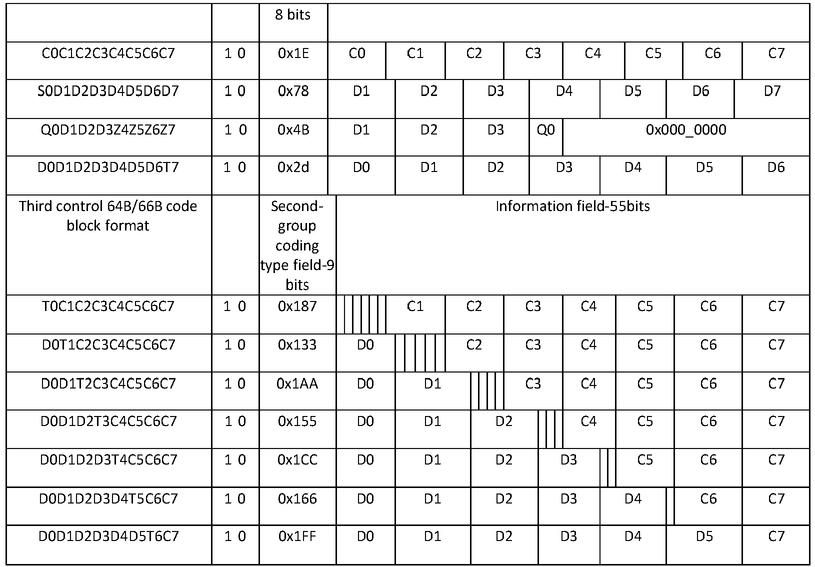

Table 2 shows coding information of the 64B/66B code block, including the 64B/66B data code block with the synchronization header of 01. The block payload of the 64B/66B data code block includes 8 numeric characters, with each numeric character including 8 bits of information, specifically "DOD1D2D3D4D5D6D7". Table 2 further includes the second control 64B/66B code blocks with the synchronization header of 10, which includes 4 different coding types. The block payload of each of the second control 64B/66B code blocks is composed of an 8-bit first-group coding type field and a 56-bit information field, wherein the first bit of the 8-bit first-group coding type field is 0, and the last 2 bits of the first 3 bits have different values, which can identify 4 different coding types. The remaining 5 bits serve as redundant bits and may be deleted when conversion to a higher-efficiency code block is needed. The values of the 8-bit first-group coding type fields are "0x1E", "0x78", "0x4B" and "0x2d", respectively, the first 3 bits being "000b", "011b", "010b" and "001b", respectively, and the corresponding information fields are "C0C1C2C3C4C5C6C7", "S0D1D2D3D4D5D6D7", "Q0D1D2D324252627" and "D0D1D2D3D4D5D6T7", respectively. Among the 4 different coding types in the first group of coding types, the 56-bit information fields thereof do not contain the information-field redundant bits.

Table 2 further includes the third control 64B/66B code blocks with the synchronization header of 10, which includes 7 different coding types. The block payload of each of the third control 64B/66B code blocks is composed of a 9-bit second-group coding type field and a 55-bit information field, wherein the first bit of the 9-bit second-group coding type field is 1, and the last 3 bits of the first 4 bits have different values, which can be used for identifying 7 different coding types. The remaining 5 bits serve as redundant bits and may be deleted when conversion to a higher-efficiency code block is needed. The values of the 9-bit second-group coding type fields are "0x187", "0x133", "0x1AA", "0x155", "0x1CC", "0x166" and "0x1FF", respectively, with the first 4 bits being "1100b", "1001b", "1101b", "1010b", "1110b", "1011b" and "1111b", respectively, and the corresponding information fields are "T0C1C2C3C4C5C6C7", "D0T1C2C3C4C5C6C7", "D0D1T2C3C4C5C6C7", "D0D1D2T3C4C5C6C7", "D0D1D2D3T4C5C6C7", "D0D1D2D3D4T5C6C7" and "D0D1D2D3D4D5T6C7", respectively, where D denotes a data character, C denotes a control character of 7 bits in length, Z denotes 7 bits of zeros, S denotes the start of a code block, T denotes the end of a code block, and Q0D1D2D3 together denote a control character of 28 bits in length - an ordered set control block.

Optionally, for a 66-bit code block, the 1st and 2nd bits thereof are defined as the synchronization header. On the premise that the code block is determined to be a second control 64B/66B code block or a third control 64B/66B code block based on the synchronization header being 10, whether the code block is the second control 64B/66B code block or the third control 64B/66B code block can be further determined according to whether the 3rd bit of the 66 bits is 0 or 1. If the 3rd bit of the 66 bits is 0, the 66-bit code block is the second control 64B/66B code block. In this case, the coding type field is 8 bits in length, corresponding to the 3rd to 10th bits of the 66 bits. The first 3 bits of the 8-bit coding type field are valid bits, which may be used for identifying 4 different coding types, and the remaining 5 bits are type-field redundant bits, which may be deleted when conversion to a higher-efficiency code block is needed. If the 3rd bit of the 66 bits is 1, the 66-bit code block is the third control 64B/66B code block. In this case, the coding type field is 9 bits in length, corresponding to the 3rd to 11th bits of the 66 bits. The first 4 bits of the 9-bit coding type field are valid bits, which may be used for identifying 7 different coding types, and the remaining 5 bits are type-field redundant bits, which may be deleted when conversion to a higher-efficiency code block is needed.

In an implementation, a code block in any coding type among the first group of coding types has no information-field redundant bits in the 56-bit information field; and a code block in any coding type among the second group of coding types has information-field redundant bits in the 56-bit information field.

In the embodiment of the present application, the 56-bit information field in the code blocks in the first group of coding types does not include the information-field redundant bits, which include a data character, a control character, and fixed information. When forming the second control 64B/66B code block, the 8-bit type field is converted into the 8-bit first-group coding type field, and the 56-bit information field is kept unchanged. The 8-bit type field is used for identifying 11 different coding types and actually contain 4 type-field redundant bits. The 8-bit first-group coding type field obtained after conversion is used for identifying 4 different coding types and actually contain 5 type-field redundant bits. The 56-bit information field in the code block in the second group of coding types includes a data character, a control character, fixed information, and information-field redundant bits. For the information-field redundant bits, when forming the third control 64B/66B code block, preset information-field redundant bits are deleted, and type-field redundant bits are increased, so as to convert the original 8-bit type field and 56-bit information field into the 9-bit second-group coding type field and 55-bit information field. As a result, each of the 8-bit first-group coding type field in the second control 64B/66B code block and the 9-bit second-group coding type field in the third control 64B/66B code block contains 5 type-field redundant bits. Compared with the fact that the 8-bit type field in the first control 64B/66B code block contains 4 type-field redundant bits, the coding type fields of the second control 64B/66B code block and the third control 64B/66B code blocks have 1 more type-field redundant bits.

In an implementation, the 8-bit first-group coding type field includes a 3-bit control type identifier and 5 type-field redundant bits, wherein the 3-bit control type identifier is used to identify code blocks in ***a*** different coding types among the first group of coding types, and ***a*** is a positive integer less than 7; and the 9-bit second-group coding type field includes a 4-bit control type identifier and 5 type-field redundant bits, the 4-bit control type identifier is used to identify code blocks in b different coding types among the second group of coding types, and b =11- a .

In the embodiment of the present application, the converted 8-bit first-group coding type field of the code block in the first group of coding types specifically include the3-bit control type identifier and 5 type-field redundant bits. The converted 9-bit second-group coding type field of the code block in the second group of coding types specifically include the 4-bit control type identifier and 5 type-field redundant bits. There are 11 coding types in total. If the first group of coding types includes ***a*** coding types, then the second group of coding types includes (11-a) coding types. Both the first group of coding types and the second group of coding types identify different coding types through the control type identifiers.

In an implementation, a value of the 3-bit control type identifier is a 3-bit value from a first value group, and the first value group includes ***a*** different 3-bit values, wherein the ***a*** different 3-bit values are selected from c different 3-bit values, where $c = a + round \left(\frac{b}{2}\right)$, where $round \left(\frac{b}{2}\right)$ represents performing a rounding operation on $\frac{b}{2}$; and a value of the 4-bit control type identifier is a 4-bit value from a second value group, and the second value group includes b different 4-bit values, wherein ***a*** different 3-bit values corresponding to the first value group are removed from c different 3-bit values to obtain (c-a) different 3-bit values, 1 bit is added to the (c-a) different 3-bit values to obtain 2*(c-a) different 4-bit values, and the b different 4-bit values are selected from 2*(c-a) different 4-bit values as the second value group.

In the embodiment of the present application, different coding types are identified by different values of the bits in the control type identifiers. The ***a*** different 3-bit values are selected from the c different 3-bit values as the first value group for the 3-bit control type identifiers, for identifying the code blocks in ***a*** different coding types among the first group of coding types. (c-a) different 3-bit values are obtained by removing ***a*** different 3-bit values corresponding to the first value group from c different 3-bit values, 2*(c-a) different 4-bit values are obtained by adding 1 bit to (c-a) different 3-bit values, and b different 4-bit values are selected from 2*(c-a) different 4-bit values as the second value group, for identifying the code blocks in b different coding types among the second group of coding types.

In an implementation, the above step 104 of converting the 8-bit type field of the code block in the first group of coding types into the 8-bit first-group coding type field may include the following steps.

At Step 1041, a specific coding type is determined according to a value of the 8-bit type field of the code block in the first group of coding types.

The 8-bit type field has 11 different values, corresponding to 11 different coding types. The 11 different values of the 8-bit type field may be found in Table 1 under "Type field - 8 bits", and coding formats of the 11 different coding types may be found in Table 1 under "First control 64B/66B code block format".

At Step 1042, a value of the 3-bit control type identifier is determined according to the determined specific coding type.

At Step 1043, the 8-bit first-group coding type field is obtained according to the value of the 3-bit control type identifier and the 5 type-field redundant bits.

The values of the 5 type-field redundant bits may be all 0, or may be specific values, such that the specific 8 bits among the ***a*** values of the 8-bit first-group coding type field and the b values of the 9-bit second-group coding type field have a Hamming distance greater than or equal to n, where n is an integer greater than or equal to 2.

In the embodiment of the present application, the first control 64B/66B code blocks include 11 different coding types, and the coding types may be distinguished by coding formats. The specific coding formats of the 11 coding types may be found in Table 1 under "First control 64B/66B code block format". The first group of coding types includes the ***a*** coding types among the 11 different coding types, and the 56-bit information fields of the ***a*** coding types do not contain the information-field redundant bits. For the first control 64B/66B code blocks, the specific coding type corresponding to the value of its 8-bit type field may be determined according to that value. If the determined coding type belongs to one of the ***a*** coding types in the first group of coding types, then the first control 64B/66B code block belongs to the code blocks in the first group of coding types. Then, the value of the 3-bit control type identifier in the 8-bit first-group coding type field may be determined according to the determined coding type, and together with the 5 type-field redundant bits, a total of 8 bits are obtained. These 8 bits are used as the values of the 8-bit first-group coding type field, thereby obtaining the second control 64B/66B code block from the 8-bit first-group coding type fields and the 56-bit information fields.

In an implementation, the above step 104 of converting the 8-bit type field of the code block in the second group of coding type into the 9-bit second-group coding type field, and converting the 56-bit information field into the 55-bit information field may include the following steps.

At Step 1044, a specific coding type is determined according to a value of the 8-bit type field of the code block in the second group of coding types.

The 8-bit type field has 11 different values, corresponding to 11 different coding types. The 11 different values of the 8-bit type field may be found in Table 1 under "Type field - 8 bits", and coding formats of the 11 different coding types may be found in Table 1 under "First control 64B/66B code block format".

At Step 1045, a value of the 4-bit control type identifier is determined according to the determined specific coding type.

At Step 1046, the 9-bit second-group coding type field is obtained according to the value of the 4-bit control type identifier and the 5 type-field redundant bits.

The values of the 5 type-field redundant bits may be all 0, or may be specific values, such that the specific 8 bits among the ***a*** values of the 8-bit first-group coding type field and the b values of the 9-bit second-group coding type field have a Hamming distance greater than or equal to n, where n is an integer greater than or equal to 2.

At Step 1047, 1 information-field redundant bit is deleted from the 56-bit information field to obtain the 55-bit information field.

The position of the deleted 1 information-field redundant bit is determined according to the second group of coding types. The rule may be that the deleted 1 information-field redundant bit is the first occurring information-field redundant bit, or the rule may be to determine the specific position of the deleted 1 bit of information-field redundant bit according to different coding types.

In the embodiment of the present application, the first control 64B/66B code block includes 11 different coding types, and the coding types may be distinguished by coding formats. The specific coding formats of the 11 coding types may be found in Table 1 under "First control 64B/66B code block format". The second group of coding types includes the b coding types among the 11 different coding types, and at least one information-field redundant bit exists in the 56-bit information field of the b coding types. For the first control 64B/66B code blocks, the specific coding type corresponding to the value of its 8-bit type fields may be determined according to that value. If the determined coding type belongs to one of the b coding types in the second group of coding types, then the first control 64B/66B code block belongs to the code blocks in the second group of coding types. Then, the value of the 4-bit control type identifier in the 9-bit second-group coding type field may be determined according to the determined coding type, and together with the 5 type-field redundant bits, a total of 9 bits are obtained. These 9 bits are used as the values of the 9-bit second-group coding type field, and the 1 information-field redundant bit is deleted from the 56-bit information field to obtain the 55-bit information field, thereby forming the third control 64B/66B code block from the 9-bit second-group coding type field and the 55-bit information field.

In an implementation, the above step 108 of transmitting the data 64B/66B code block, the second control 64B/66B code blocks, or the third control 64B/66B code blocks may include the following steps.

At Step 1, 5 type-field redundant bits are deleted from the second control 64B/66B code block, or 5 type-field redundant bits are deleted from the third control 64B/66B code block.

The 5 type-field redundant bits in the second control 64B/66B code blocks and the third control 64B/66B code blocks deleted to free up bit space when it is necessary to convert the 64B/66B code blocks into code blocks with higher coding efficiency.

At Step 2, 16 consecutive code blocks are converted into one 1024B/1025B code block, wherein each of the 16 consecutive code blocks is a data 64B/66B code block, a second control 64B/66B code block or a third control 64B/66B code block.

At Step 3, the 1024B/1025B code block is transmitted.

An embodiment of the above step 2 is as follows. In the 1024B/1025B code block, the 1st bit being 0 represents that the latter 1024 bits correspond to 16 data 64B/66B code blocks, the 1st bit being 1 represents that the 16 64B/66B code blocks corresponding to the latter 1024 bits at least contain one second control 64B/66B code block or third control 64B/66B code block, wherein, the 1st bit being 1 and the 2nd bit being 0 represent that among the 16 64B/66B code blocks, there is only one second control 64B/66B code block or third control 64B/66B code block, and its position is determined by a value of the 3rd to 6th bits; the 1st bit being 1, the 2nd bit being 1, and the 3rd bit being 0 represent that among the 16 64B/66B code blocks, there are 2 second control 64B/66B code blocks or third control 64B/66B code blocks, wherein a value of the 4th to 7th bits represents the position of one second control 64B/66B code block or third control 64B/66B code block with the earlier position, and a value of the 8th to 11th bits represents the position of one second control 64B/66B code block or third control 64B/66B code block with the later position; the 1st bit being 1, the 2nd bit being 1, the 3rd bit being 1, and the 4th bit being 0 represent that among the 16 64B/66B code blocks, there are 3 second control 64B/66B code blocks or third control 64B/66B code blocks, wherein a value of the 5th to 8th bits represents the position of one second control 64B/66B code block or third control 64B/66B code block with the earliest position, a value of the 9th to 12th bits represents the position of one second control 64B/66B code block or third control 64B/66B code block with the second earliest position, and a value of the 13th to 16th bits represents the position of one second control 64B/66B code block or third control 64B/66B code block with the third earliest position; the 1st bit being 1, the 2nd bit being 1, the 3rd bit being 1, and the 4th bit being 1 represent that among the 16 64B/66B code blocks, there are at least 4 second control 64B/66B code blocks or third control 64B/66B code blocks, wherein in the 16 bits from the 5th bit to the 20th bit, the 5th bit represents a type of the 1st 64B/66B code block among the 16 64B/66B code blocks, with 0 representing that the 1st 64B/66B code block is a data 64B/66B code block, and 1 representing that the 1st 64B/66B code block is a second control 64B/66B code block or a third control 64B/66B code block; the 6th bit represents a type of the 2nd 64B/66B code block among the 16 64B/66B code blocks, with 0 representing that the 2nd 64B/66B code block is a data 64B/66B code block, and 1 representing that the 2nd 64B/66B code block is a second control 64B/66B code block or a third control 64B/66B code block; and so on, until the 20th bit represents a type of the 16th 64B/66B code block among the 16 64B/66B code blocks, with 0 representing that the 16th 64B/66B code block is a data 64B/66B code block, and 1 representing that the 16th 64B/66B code block is a second control 64B/66B code block or a third control 64B/66B code block. The 21st bit is fixed to be 0. Through the above bit definitions, 1025 bits may be used to represent the 16 consecutive 64B/66B code blocks, each of which may be a data 64B/66B code block, or a second control 64B/66B code block, or a third control 64B/66B code block.

In an implementation, the above method for transmitting the 64B/66B code block may be applied to a sending end of an electronic device. At a receiving end of the electronic device, the following steps may be performed.

At Step 1, a 1024B/1025B code block is received.

The sending end may transmit the 1024B/1025B code block converted from the data 64B/66B code block, the second control 64B/66B code block, and/or the third control 64B/66B code block; while the receiving end may receive the 1024B/1025B code block transmitted by another sending end.

At Step 2, the 1024B/1025B code block is converted into 16 64B/66B code blocks, wherein each of the 16 64B/66B data blocks is a data 64B/66B code block, a second control 64B/66B code block or a third control 64B/66B code block.

At Step 3, the second control 64B/66B code block or the third control 64B/66B code block is converted into the first control 64B/66B code block.

In the embodiment of the present application, the receiving end receives the 1024B/1025B code block converted from the data 64B/66B code block, the second control 64B/66B code block, and/or the third control 64B/66B code blocks, then converts the 1024B/1025B code block back into 16 data 64B/66B code block, the second control 64B/66B code block, and/or the third control 64B/66B code blocks, and further converts the obtained second control 64B/66B code blocks and third control 64B/66B code blocks into the original first control 64B/66B code blocks to-be-transmitted, thereby achieving the conversion of the 64B/66B code blocks into code blocks with higher coding efficiency for transmission.

It should be noted that the 64B/66B code blocks are used in existing 10 GE and 40 GE Ethernet physical layer signals. In Ethernet physical layer signals at a rate of over 100 GE, a media access control frame is first converted into the 64B/66B code blocks, and then the 64B/66B code blocks are converted into 256B/257B code blocks. FEC coding information is added to the 256B/257B code blocks to form FEC code blocks, which are finally transmitted on the physical layer. As the rate of the Ethernet physical layer signals further increases, for example, in Ethernet at a rate of over 1.6 Tbps, it is highly likely that code blocks with higher efficiency than the 256B/257B code blocks, such as 512B/513B code blocks or 1024B/1025B code blocks, need to be used. Through the method of the embodiment of the present application, the 64B/66B code blocks may be converted into the 1024B/1025B code blocks in a relatively simple manner, facilitating the future replacement of the 256B/257B code blocks with the 1024B/1025B code blocks, thereby further decreasing the rate of the Ethernet physical layer signals.

In addition, the present application can also be used in an optical transport network (OTN) or a slicing packet network (SPN) to decrease the rate of 64B/66B coding signals when transmitting the 64B/66B code blocks. For example, G.709 specifies that Fibre Channel-1200 (FC-1200) signals and 40 GE signals also need to first convert the 64B/66B coding signals into 512B/513B coding signals. Thus, the method of the present application can be used to convert the 64B/66B code blocks into the 1024B/1025B code blocks, thereby further decreasing the rate of the converted code blocks.

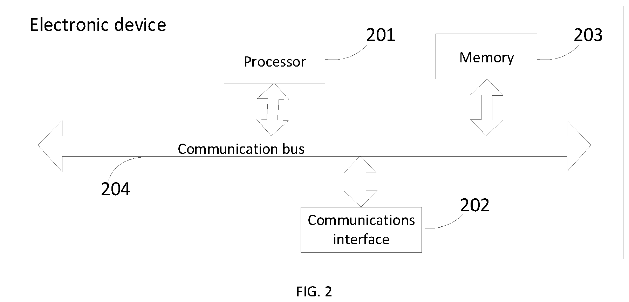

An embodiment of the present application further provides an electronic device. FIG. 2 shows a schematic structural diagram of an electronic device provided by an exemplary embodiment of the present application. Referring to FIG. 2, the electronic device is configured to perform the above method for transmitting the present application the 64B/66B code blocks. FIG. 2 is a schematic structural diagram of an electronic device for implementing various embodiments of the present application. The electronic device may vary significantly due to differences in configuration or performance, and may include: a processor 201, a communications interface 202, a memory 203, and a communication bus 204, wherein the processor 201, the communications interface 202, and the memory 203 complete mutual communication through the communication bus 204. The processor 201 may call a computer program stored in the memory 203 and runnable on the processor 201 to perform various steps of the above embodiment of the method for transmitting the 64B/66B code block, and can achieve the same technical effect, which will not be repeated here to avoid repetitions.

It should be noted that the electronic device in the embodiment of the present application includes: a server, a terminal, or other devices other than the terminal.

The above electronic device structure does not constitute a limitation on the electronic device. The electronic device may include more or fewer components than shown in the diagram, or combine certain components, or arrange different components. For example, an input unit may include a graphics processing unit (GPU) and a microphone, and a display unit may be configured with a display panel in a form of a liquid crystal display, an organic light-emitting diode, and the like. The user input unit includes at least one of a touch panel or other input devices. The touch panel is also known as a touch screen. Other input devices may include, but are not limited to, a physical keyboard, a functional key (such as a volume control key or a switch key), a track ball, a mouse, and a joystick, which are not repeated here.

The memory may be configured to store a software program and various data. The memory may mainly include a first storage area for storing a program or an instruction and a second storage area for storing data. The first storage area may store an operating system, an application program or instruction required by at least one function (such as a sound playback function and an image display function), and the like. In addition, the memory may include a volatile memory or a non-volatile memory, or the memory may include both the volatile memory and the non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM), a static RAM (SRAM), a dynamic RAM (DRAM), a synchronous DRAM (SDRAM), a double data rate SDRAM (DDRSDRAM), an enhanced SDRAM (ESDRAM), a synch link DRAM (SLDRAM), and a direct rambus RAM (DRRAM).

The processor may include one or more processing units. Optionally, the processor integrates an application processor and a modem processor, wherein the application processor mainly processes operations related to an operating system, a user interface, an application program and the like, and the modem processor mainly processes a wireless communication signal, such as a baseband processor. It may be understood that the above modem processor may also not be integrated in the processor.

An embodiment of the present application further provides a readable storage medium. The readable storage medium stores at least one computer program therein, and the computer program is loaded and executed by a processor to implement all or part of the steps in the method for transmitting the 64B/66B code blocks method above. For example, the readable storage medium may be a read-only memory (ROM), a random access memory (RAM), a compact disc read-only memory (CD-ROM), a magnetic tape, a floppy disk, an optical data storage device and the like.

It should be noted that terms "including," "containing," or any other variations herein are intended to cover non-exclusive inclusion, such that a process, method, item or apparatus that includes a series of elements not only includes those elements, but also other elements that are not explicitly listed, or further include elements inherent in such the process, method, item or apparatus. Without more limitations, elements defined by a statement "including one" do not exclude the existence of other identical elements in the process, method, item or apparatus that includes the said elements. In addition, it is to be pointed out that the scope of the methods and apparatuses in the implementations of the present application is not limited to performing functions in an order shown or discussed, but may further include performing functions in a substantially simultaneous mode or in an opposite order according to the involved functions. For example, the described methods may be executed in a different order from the described ones, and various steps may also be added, omitted, or combined. In addition, features described with reference to certain examples may be combined in other examples.

According to the descriptions in the foregoing implementations, those skilled in the art may clearly learn that the method according to the above embodiment may be implemented by relying on software and a commodity hardware platform or by using hardware. However, in many cases, the former is the better implementation. Based on such an understanding, the technical solutions of the present application essentially, or the part contributing to the prior art, may be presented in the form of a software product. The computer software product is stored in a storage medium (such as an ROM/RAM, a magnetic disk, or an optical disc) including several instructions to enable a terminal (which may be a mobile phone, a computer, a server, an air conditioner, a network device, or the like) to execute the methods described in all the embodiments of the present application.

Those skilled in the art will easily figure out other implementation solutions of the present application after considering the specification and practicing the invention disclosed here. The present application intends to cover any transformation, usage or adaptive change of the present application, and these transformations, usages or adaptive changes conform to a general principle of the present application and include common general knowledge or conventional technical means in the technical field not disclosed by the present application. The specification and the embodiments are merely regarded as being for example, and the true scope and spirit of the present application are indicated by the claims.

It will be appreciated that the present application is not limited to the exact structure that has been described above and shown in the accompanying drawings, and that various modifications and changes may be made without departing from the scope of the present application. The scope of the present application is limited merely by the appended claims.

## Claims

1. A method for transmitting a 64B/66B code block, comprising:
acquiring a 64B/66B code block to be transmitted, wherein the 64B/66B code block comprises a 2-bit synchronization header, and a value of the 2-bit synchronization header is used to indicate that the 64B/66B code block is a data 64B/66B code block or a first control 64B/66B code block; and the first control 64B/66B code block further comprises an 8-bit type field and a 56-bit information field, and a value of the 8-bit type field is used to distinguish between 11 different coding types;
upon the condition that first control 64B/66B code blocks in the 11 different coding types are divided into code blocks in a first group of coding types and code blocks in a second group of coding types, converting the 8-bit type field of a code block in the first group of coding types into an 8-bit first-group coding type field and keeping the 56-bit information field thereof unchanged, or converting the 8-bit type field of a code block in the second group of coding types into a 9-bit second-group coding type field and converting the 56-bit information field thereof into a 55-bit information field;
forming 66 bits of a second control 64B/66B code block from the 2-bit synchronization header, the 8-bit first-group coding type field, and the 56-bit information field; or forming 66 bits of a third control 64B/66B code block from the 2-bit synchronization header, the 9-bit second-group coding type field, and the 55-bit information field; and
transmitting the data 64B/66B code block, the second control 64B/66B code block, or the third control 64B/66B code block.

2. The method according to claim 1, wherein in the 64B/66B code block to be transmitted, a value of the 2-bit synchronization header being 01 represents that the 64B/66B code block is the data 64B/66B code block; a value of the 2-bit synchronization header being 10 represents that the 64B/66B code block is the first control 64B/66B code block; and a 56-bit information field comprises a data character, a control character, fixed information, and information-field redundant bits.

3. The method according to claim 2, wherein the 56-bit information field of the first control 64B/66B code block comprises the data character, the control character, the fixed information, and the information-field redundant bits, wherein the data character has a length of 8 bits and is represented by Dn, wherein n is a number from 1 to 8, and n represents an order in which the data character appears in the 56-bit information field; two types of control characters are comprised, one type of control character has a length of 7 bits and is represented by Cm, wherein m is a number from 1 to 8 and m represents an order in which the control character appears in the 56-bit information field, and the other type of control character has a length of 28 bits, comprising one 4-bit Q0 and three data characters D1, D2, and D3; the fixed information comprises zeros in 28 bits, respectively; and the information-field redundant bits are bits in the 56-bit information field other than the data character, the control character, and the fixed information.

4. The method according to claim 3, wherein a code block in any coding type among the first group of coding types has no information-field redundant bits in the 56-bit information field; and a code block in any coding type among the second group of coding types has information-field redundant bits in the 56-bit information field.

5. The method according to claim 2, wherein the 8-bit first-group coding type field comprises a 3-bit control type identifier and 5 type-field redundant bits, wherein the 3-bit control type identifier is used to identify code blocks in ***a*** different coding types among the first group of coding types, and ***a*** is a positive integer less than 7; and the 9-bit second-group coding type field comprises a 4-bit control type identifier and 5 type-field redundant bits, the 4-bit control type identifier is used to identify code blocks in b different coding types among the second group of coding types, and b =11- *a* .

6. The method according to claim 5, wherein
a value of the 3-bit control type identifier is a 3-bit value from a first value group, and the first value group comprises ***a*** different 3-bit values, wherein the ***a*** different 3-bit values are selected from c different 3-bit values, $c = a + round \left(\frac{b}{2}\right)$, wherein $round \left(\frac{b}{2}\right)$ represents performing a rounding operation on $\frac{b}{2}$ ; and
a value of the 4-bit control type identifier is a 4-bit value from a second value group, and the second value group comprises b different 4-bit values, wherein ***a*** different 3-bit values corresponding to the first value group are removed from c different 3-bit values to obtain (c-a) different 3-bit values, 1 bit is added to the (c-a) different 3-bit values to obtain 2*(c-a) different 4-bit values, and the b different 4-bit values are selected from the 2*(c-a) different 4-bit values as the second value group.

7. The method according to claim 6, wherein converting the 8-bit type field of a code block in the first group of coding types into the 8-bit first-group coding type field comprises:
determining a specific coding type according to a value of the 8-bit type field of the code block in the first group of coding types;
determining a value of the 3-bit control type identifier according to a determined specific coding type; and
obtaining the 8-bit first-group coding type field according to the value of the 3-bit control type identifier and the 5 type-field redundant bits.

8. The method according to claim 6, wherein converting the 8-bit type field of a code block in the second group of coding types into the 9-bit second-group coding type field and converting the 56-bit information field thereof into the 55-bit information field comprise:
determining a specific coding type according to a value of the 8-bit type field of the code block in the second group of coding types;
determining a value of the 4-bit control type identifier according to a determined specific coding type;
obtaining the 9-bit second-group coding type field according to the value of the 4-bit control type identifier and the 5 type-field redundant bits; and
deleting 1 information-field redundant bit from the 56-bit information field to obtain the 55-bit information field;
wherein a position of a deleted 1 information-field redundant bit is determined according to the second group of coding types.

9. The method according to any one of claims 1 to 8, wherein transmitting the data 64B/66B code block, the second control 64B/66B code block, or the third control 64B/66B code block comprises:
deleting 5 type-field redundant bits from the second control 64B/66B code block, or deleting 5 type-field redundant bits from the third control 64B/66B code block;
converting 16 consecutive 64B/66B code blocks into one 1024B/1025B code block, wherein each of the 16 consecutive 64B/66B code blocks is a data 64B/66B code block, a second control 64B/66B code block or a third control 64B/66B code block; and
transmitting the 1024B/1025B code block.

10. The method according to claim 9, wherein after transmitting the 1024B/1025B code block, the method further comprises:
receiving a 1024B/1025B code block;
converting the 1024B/1025B code block into 16 64B/66B code blocks, wherein each of the 16 64B/66B data blocks is a data 64B/66B code block, a second control 64B/66B code block, or a third control 64B/66B code block; and
converting the second control 64B/66B code block or the third control 64B/66B code block into a first control 64B/66B code block.

11. An electronic device, comprising a processor and a memory, wherein the memory stores a program or instruction runnable on the processor, and the program or the instruction, when executed by the processor, implements the method for transmitting a 64B/66B code block according to any one of claims 1 to 10.

12. A readable storage medium, having a program or instruction stored thereon, wherein the program or the instruction, when executed by a processor, implements the method for transmitting a 64B/66B code block according to any one of claims 1 to 10.
